# EUROPÄISCHE PATENTSCHRIFT

(11) **EP 0 866 758 B1**
(45) Veröffentlichungstag und Bekanntmachung des Hinweises auf die Patenterteilung: **17.07.2002**
(21) Anmeldenummer: 96943026.3
(22) Anmeldetag: 29.11.1996
(51) Int. Cl.: B60T 13/72

(54) **BREMSKRAFTVERSTÄRKER**
POWER BRAKE FOR MOTOR VEHICLES
FREIN ASSISTE

(30) Priorität: 23.12.1995 DE 19548705
(43) Veröffentlichungstag der Anmeldung: 30.09.1998
(73) Patentinhaber: Continental Teves AG & Co. oHG, 60488 Frankfurt (DE)
(72) Erfinder: KAHRS, Manfred, D-65207 Wiesbaden (DE); ECKERT, Alfred, D-55294 Bodenheim (DE); BERTHOLD, Thomas, D-64289 Darmstadt (DE); VOGT, Michael, D-55469 Simmern (DE); KLESEN, Christof, D-64397 Modautal (DE)
(86) Internationale Anmeldenummer: EP9605285
(87) Internationale Veröffentlichungsnummer: WO9723374

(56) Entgegenhaltungen:
- EP-A- 0 668 201
- WO-A-94/11226
- DE-A- 4 324 205

## Beschreibung

Die Erfindung betrifft einen pneumatischen Bremskraftverstärker für Kraftfahrzeuge mit einem Verstärkergehäuse, dessen Innenraum durch eine bewegliche Wand in eine Unterdruckkammer und eine Arbeitskammer unterteilt ist, sowie mit einem die bewegliche Wand tragenden Steuergehäuse, in dem ein Steuerventil angeordnet ist, das eine auf die bewegliche Wand einwirkende pneumatische Druckdifferenz steuert und sowohl durch eine Betätigungsstange mittels eines Ventilkolbens als auch unabhängig von der Betätigungsstange durch einen mit dem Ventilkolben fest verbundenen Elektromagneten betätigbar ist und aus drei konzentrisch zueinander angeordneten Dichtsitzen sowie einem mit den Dichtsitzen zusammenwirkenden Ventilkörper besteht, wobei der erste Dichtsitz im Steuergehäuse und der zweite Dichtsitz am Ventilkolben ausgebildet sind, während der dritte Dichtsitz an einer mit dem Elektromagneten zusammenwirkenden Hülse ausgebildet ist.

Ein derartiger Bremskraftverstärker bzw. dessen Verwendung zur Bremsdruckregelung ist aus der DE 43 24 205 A1 bekannt. Zu diesem Zweck ist eine Regelung der Position der vorhin erwähnten Hülse mittels eines Lagereglers vorgesehen, dem Signale eines Wegaufnehmers zugeführt werden und der eine starke Destabilisierung der Verbraucherkennlinie verhindert, indem er den dem Elektromagneten zugeführten elektrischen Strom so steuert, daß sich eine stabile Position der Hülse ergibt. Dem Lageregler ist dabei ein Druckregler vorgeschaltet, dessen Ausgangssignal einer Sollwertposition für den unterlagerten Lageregler entspricht.

Es ist daher Aufgabe der vorliegenden Erfindung, Maßnahmen vorzuschlagen, die eine Stabilisierung der Verbraucherkennlinie im Druckabbaubereich durch konstruktive Änderungen am Steuerventil des fremdansteuerbaren Bremskraftverstärkers ermöglichen. Insbesondere soll auf den Einsatz des vorhin erwähnten kostenintensiven Lagereglers sowie der erforderlichen Sensorik verzichtet werden können.

Diese Aufgabe wird erfindungsgemäß dadurch gelöst, daß Mittel vorgesehen sind, die in der Druckabbauphase während der Rücklaufbewegung des dritten Dichtsitzes vom Ventilkörper einen gesteuerten pneumatischen Druckausgleich zwischen Arbeits- und Unterdruckkammer ermöglichen.

Zur Konkretisierung des Erfindungsgedankens sieht eine vorteilhafte Weiterbildung der Erfindung vor, daß ein gegenüber dem dritten Dichtsitz verschiebbar angeordneter Ring vorgesehen ist, der unter Zwischenschaltung eines elastischen bzw. zusammendrückbaren Elementes an der Hülse abgestützt ist und dessen dem Ventilkörper zugewandter Randbereich radiale Durchbrüche aufweist und in der Lösestellung gegenüber dem dritten Dichtsitz zum Ventilkörper hin axial versetzt angeordnet ist.

Bei einer anderen vorteilhaften Ausgestaltung des Erfindungsgegenstandes ist der Ventilkörper im Anlagebereich des dritten Dichtsitzes mit einer zusätzlichen Ringfläche versehen, die radiale Öffnungen aufweist.

Bei einer weiteren Alternativlösung ist der dritte Dichtsitz mit axialen Ausnehmungen bzw. Vertiefungen versehen, die z.B. als wellige Dichtkante ausgeführt sein können.

Weitere vorteilhafte Ausgestaltungen des Erfindungsgegenstandes sind in den Unteransprüchen 3 bis 8 aufgeführt.

Die Erfindung wird in der nachfolgenden Beschreibung an einem Ausführungsbeispiel im Zusammenhang mit der beiliegenden Zeichnung näher erläutert. In der Zeichnung zeigt:
- Fig. 1: eine Ausführung des erfindungsgemäßen Bremskraftverstärkers im Längsschnitt, teilweise weggebrochen, in der inaktiven Bereitschaftstellung,
- Fig. 2a bis d: eine erste Ausführung des Steuerventils des Bremskraftverstärkers nach Fig. 1 in der Ruhe-, Druckaufbau-, Druckhalte- und Druckabbaustellung in größerem Maßstab;
- Fig. 3: eine zweite Ausführung des Steuerventils des Bremskraftverstärkers nach Fig. 1 bei einem geregelten Druckabbau;
- Fig. 4: eine dritte Ausführung des Steuerventils des Bremskraftverstärkers nach Fig. 1 bei einem geregelten Druckabbau; und
- Fig. 5: eine diagrammatische Darstellung der Funktion des Elektromagneten und des Steuerventils bei dem in Fig. 1 gezeigten

Bremskraftverstärker bzw. der Abhängigkeit der vom Elektromagneten aufgebrachten Kraft F_{EM} und der Bedarfskraft der Hülse von dem von der Hülse zurückgelegten Weg s_{H}.

Das lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden, in einem im Steuergehäuse 5 abgedichtet angeordneten Führungsteil 21 geführten, ringförmigen Ventilkörper 10, der mittels einer sich am Führungsteil 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der an der unterdruckseitigen Verstärkergehäusehälfte angebracht ist.

Eine in der Zeichnung schematisch dargestellte Rückstellfeder 26, die sich an der unterdruckseitigen Stirnwand des Verstärkergehäuses 1 abstützt, hält die bewegliche Wand 2 in der gezeigten Ausgangsstellung. Außerdem ist eine zweite Druckfeder bzw. Kolbenstangenrückholfeder 27 vorgesehen, die einerseits indirekt an der Betätigungsstange 7 und andererseits am Führungsteil 21 abgestützt ist und deren Kraft für eine Vorspannung des Ventilkolbens 9 bzw. seines Dichtsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem im Verstärkergehäuse 1 ausgebildeten Anschlag 38 anliegt.

Wie der Zeichnung weiter zu entnehmen ist, weist der Ventilkörper 10 eine mit den beiden Dichtsitzen 15,16 zusammenwirkende ringförmige Dichtfläche 44 auf, die mittels einer metallischen Versteifungsscheibe 45 versteift ist und mit mehreren axialen Durchlässen 19 versehen ist. Außerdem weist der Ventilkörper 10 eine radial innen ausgebildete Dichtlippe 13 sowie eine radial außen ausgebildete zweite Dichtlippe 41 auf, die im montierten Zustand des Ventilkörpers 10 im Steuergehäuse 5 an dem vorhin erwähnten, den Ventilkörper 10 führenden Führungsteil 21 dichtend anliegen, so daß im Steuergehäuse 5 ein pneumatischer Raum 17 begrenzt ist. Die durch die Durchlässe 19 und Öffnungen in der Dichtfläche 44 gebildeten, näher nicht bezeichneten Strömungskanäle verbinden den pneumatischen Raum 17 mit einem durch die Dichtsitze 15,16 begrenzten Ringraum 43, in dem der oben erwähnte pneumatische Kanal 29 mündet, so daß der auf der der Dichtfläche 44 abgewandten Seite des Ventilkörpers 10 ausgebildete pneumatische Raum 17 ständig mit der Arbeitskammer 3 in Verbindung steht und am Ventilkörper 10 ein Druckausgleich stattfindet.

Die beschriebene Anordnung ermöglicht demnach eine Verringerung der Differenz zwischen der Ansprechkraft des Bremskraftverstärkers und der am Ventilkolben wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist, wodurch eine Verbesserung der Hysterese des erfindungsgemäßen Bremskraftverstärkers erreicht wird.

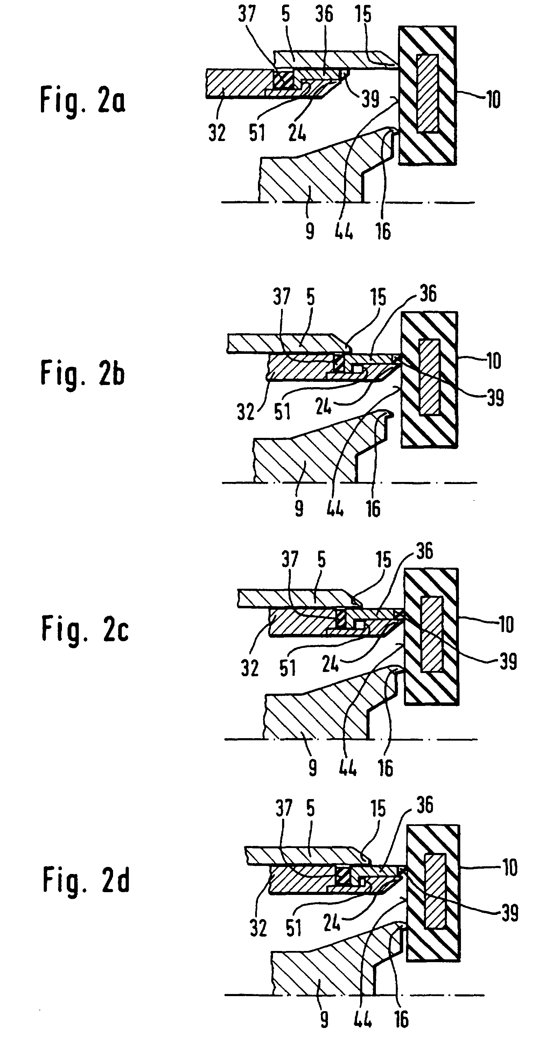

Um eine von der Betätigungsstange 7 unabhängige Fremdbetätigung des erfindungsgemäßen Bremskraftverstärkers einzuleiten ist radial zwischen dem ersten (15) und dem zweiten Dichtsitz 16 ein dritter Dichtsitz 24 vorgesehen, der mittels eines Elektromagneten 20 betätigbar ist, der vorzugsweise in einem mit dem Ventilkolben 9 fest verbundenen Gehäuse 25 angeordnet ist und demnach zusammen mit dem Ventilkolben 9 im Steuergehäuse 5 verschiebbar ist. Der Elektromagnet 20 besteht aus einer innerhalb des Gehäuses 25 angeordneten Spule 46 sowie einem axial verschiebbar angeordneten zylindrischen Anker 31, der teilweise in einem das Gehäuse 25 verschließenden Verschlußteil 30 geführt wird und an dem sich eine Hülse 32 abstützt, die mit dem vorhin erwähnten dritten Dichtsitz 24 verbunden ist. Zwischen dem Ventilkolben 9 und der Hülse 32 ist eine Druckfeder 40 angeordnet, die den Anker 31 in seiner Ausgangslage hält, in der der dritte Dichtsitz 24 gegenüber dem am Ventilkolben 9 ausgebildeten zweiten Dichtsitz 16 axial versetzt angeordnet ist, so daß zwischen dem dritten Dichtsitz 24 und der Dichtfläche 44 des Ventilkörpers 10 ein Spalt vorhanden ist. Dabei ist ein vorzugsweise die Hülse 32 radial umgreifender Ring 36 vorgesehen, der unter Zwischenschaltung eines elastischen bzw. kompressiblen Elementes 37 sich an der Hülse 32 abstützt und andererseits an einem an der Hülse 32 ausgebildeten Anschlag 51 (Fig. 2) axial anliegt, so daß zwischen ihm und der Hülse 32 eine Relativbewegung möglich ist. Der Ring 36 ist dabei bezüglich seiner Breite so ausgelegt, daß der Abstand seines dem Ventilkörper 10 zugewandten Randbereichs von der Dichtfläche 44 kleiner ist als der Abstand zwischen der Dichtfläche 44 und dem dritten Dichtsitz 24. Der erwähnte Randbereich weist axiale Durchbrüche 39 auf. Das im Steuergehäuse 5 geführte Verschlußteil 30 liegt mittels einer Übersetzungsscheibe 33 an der vorhin erwähnten Reaktionsscheibe 6 an und ermöglicht eine Übertragung der an der Betätigungsstange 7 eingeleiteten Eingangskraft auf die Reaktionsscheibe 6.

Bei der in der Zeichnung gezeigten Ausführung des erfindungsgemäßen Bremskraftverstärkers sind schließlich elektrische Schaltmittel 47, 48 vorgesehen, die insbesondere bei Bremsvorgängen wichtig sind, bei denen zusätzlich zur Fahrerbetätigung der Elektromagnet 20 angesteuert wird, um unabhängig vom Fahrerwillen eine Vollbremsung herbeizuführen (sog. Bremsassistentfunktion). Dabei ist von besonderer Bedeutung, daß die Schaltmittel 47, 48 bei jeder Bremsung betätigt werden. Gleichzeitig muß gewährleistet werden, daß der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 9 bzw. dem Gehäuse 25 des Elektromagneten 20 befestigten, zwei Schaltstellungen aufweisenden Mikroschalter 47 sowie einem den Mikroschalter 47 durch eine translatorische Bewegung betätigenden Betätigungselement 48, das in einer im Steuergehäuse 5 vorgesehenen Bohrung abgedichtet geführt ist und mit einem verstärkergehäusefesten Anschlag zusammenwirkt, der das Bezugszeichen 49 trägt und beispielsweise durch einen radialen Kragen der hinteren Verstärkergehäushälfte gebildet sein kann. Zwischen dem Betätigungselement 48 und dem Steuergehäuse 5 ist eine Druckfeder 50 angeordnet, so daß das dem Mikroschalter 47 abgewandte Ende des Betätigungselements 48 unter einer Vorspannung am Anschlag 50 anliegt.

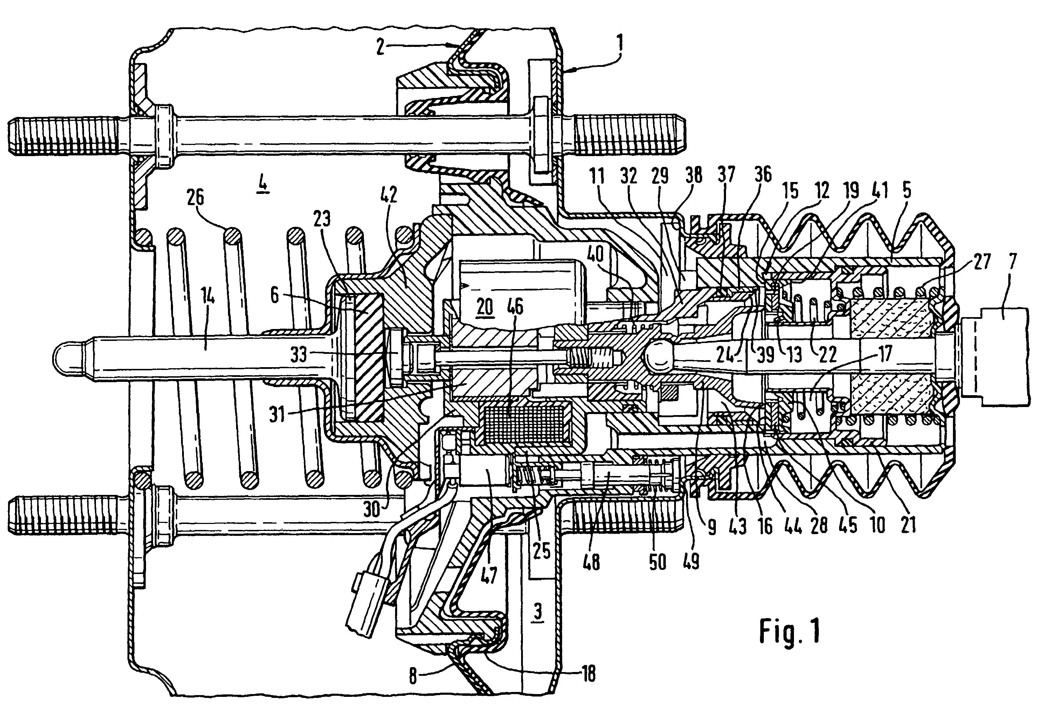

Aus Fig. 2 sind die einzelnen Betätigungsphasen des Steuerventils 12 bei dessen Fremdbetätigung durch den Elektromagneten 20 ersichtlich. In der in Fig. 2a gezeigten Ruhe-bzw. Bereitschaftsstellung des Steuerventils 12 liegt der Ventilkörper 10 sowohl am ersten (15) als auch am zweiten Dichtsitz 16 an, so daß die beiden Kammern 3,4 des Bremskraftverstärkers voneinander getrennt sind und die Verbindung der Arbeitskammer 3 mit der Atmosphäre unterbrochen ist. Der im Zusammenhang mit Fig. 1 erwähnte Randbereich des Ringes 36 sowie der dritte Dichtsitz 24 befinden sich in jeweils einem Abstand von der Dichtfläche 44 des Ventilkörpers 10.

Um die in Fig. 2b gezeigte Druckaufbaustellung einzusteuern wird der Elektromagnet 20 bestromt, so daß sowohl der dritte Dichtsitz 24 als auch der Ring 36 bei gleichzeitigem Zusammendrücken des elastischen Elementes 37 zunächst zur Anlage am Ventilkörper 10 kommen und anschließend den Ventilkörper 10 gegen die Kraft der Ventilfeder 22 (Fig. 1) in der Zeichnung nach rechts verschieben, so daß zwischen dem zweiten Dichtsitz 16 und dem Ventilkörper 10 ein Spalt entsteht und eine Belüftung der Arbeitskammer 3 erfolgt. Der erste Dichtsitz 15 wird dabei durch den dritten Dichtsitz 24 funktionsmäßig ersetzt.

In der in Fig. 2c gezeigten Druckhaltephase sind der zweite (16) sowie der dritte Dichtsitz 24 geschlossen, so daß keine Änderungen des im Verstärkergehäuse herrschenden pneumatischen Druckes auftreten können.

Fig. 2d zeigt schließlich eine geregelte Druckabbauphase, bei der der zweite Dichtsitz 16 geschlossen bleibt und der dritte Dichtsitz 24 von der Dichtfläche 44 abhebt, während der Ring 36 mit seinem Randbereich durch die Vorspannung des elastischen Elementes 37 an der Dichtfläche 44 anliegt, so daß über die vorhin erwähnten Durchbrüche 39, die am Anfang des Druckabbaus durch den Endbereich der Hülse 32 teilweise verdeckt sind, ein dosiertes Absaugen der Atmosphäre aus der Arbeitskammer 3 und somit ein Abbau des im Gehäuse des pneumatischen Bremskraftverstärkers 1 eingesteuerten pneumatischen Druckes erfolgt.

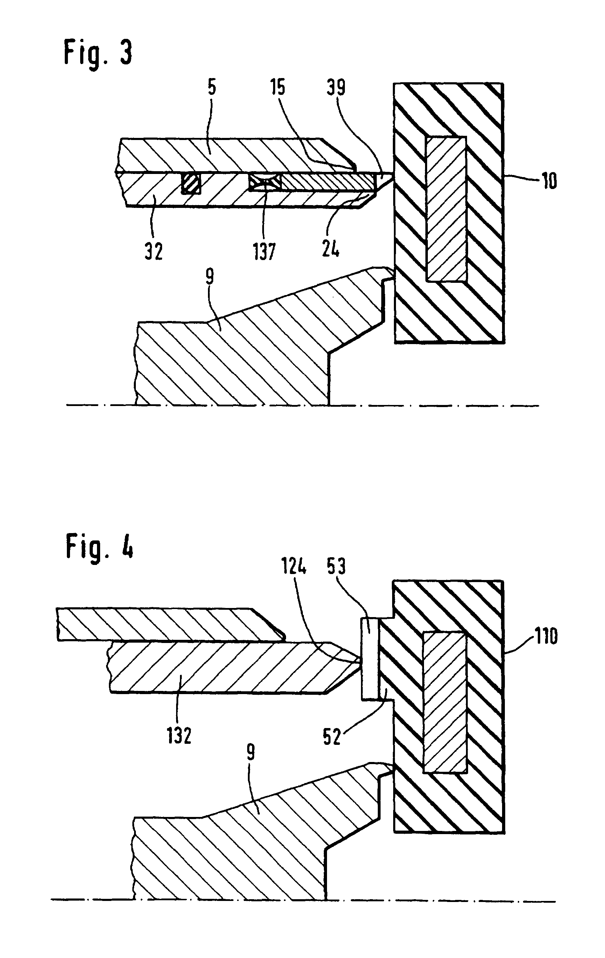

Bei der in Fig. 3 gezeigten zweiten Ausführung des Erfindungsgegenstandes ist zwischen der Hülse 32 und dem Ring 36 ein elastisches Element 137 anvulkanisiert, so daß der im Zusammenhang mit Fig. 1 bzw. 2 erwähnte Anschlag 51 entfallen kann.

Fig. 4 zeigt eine Variante mit einer bekannten Hülse 132, deren Dichtsitz 124 mit einem abgewandelten Ventilkörper 110 zusammenwirkt. Der Ventilkörper 110 ist im Anlagebereich des dritten Dichtsitzes 124 mit einer zusätzlichen Ringfläche 52 versehen, die radiale Öffnungen 53 aufweist, die beim Druckaufbau durch Hineindrücken des dritten Dichtsitzes 124 in das Material des Ventilkörpers 110 geschlossen werden. Ein dosierter Druckabbau wird beim Zurückfahren der Hülse 132 durch kontinuierliches Freigeben der Öffnungen 53 erreicht, bevor der dritte Dichtsitz 124 den Spalt zwischen ihm und dem Ventilkörper 110 ganz freigibt.

Schließlich ist eine andere Variante beschrieben, mit einer bekannten Hülse, deren den dritten Dichtsitz bildender Randbereich axiale Ausnehmungen bzw. Vertiefungen aufweist, die z. B. als wellige Dichtkante ausgeführt sein können. Beim Aufsetzen des dritten Dichtsitzes auf dem Gummimaterial des Ventilkörpers bleibt der dritte Dichtsitz solange undicht, bis er sich so weit in das Gummimaterial hineingedrückt hat, daß auch die axiale Begrenzung der Vertiefungen das Gummi berührt und somit vollständig abdichtet. Ein dosierter Druckabbau wird beim Zurückfahren der Hülse durch kontinuierliches Freigeben der Vertiefungen erreicht, bevor der dritte Dichtsitz den Spalt zwischen ihm und dem Ventilkörper ganz freigibt.

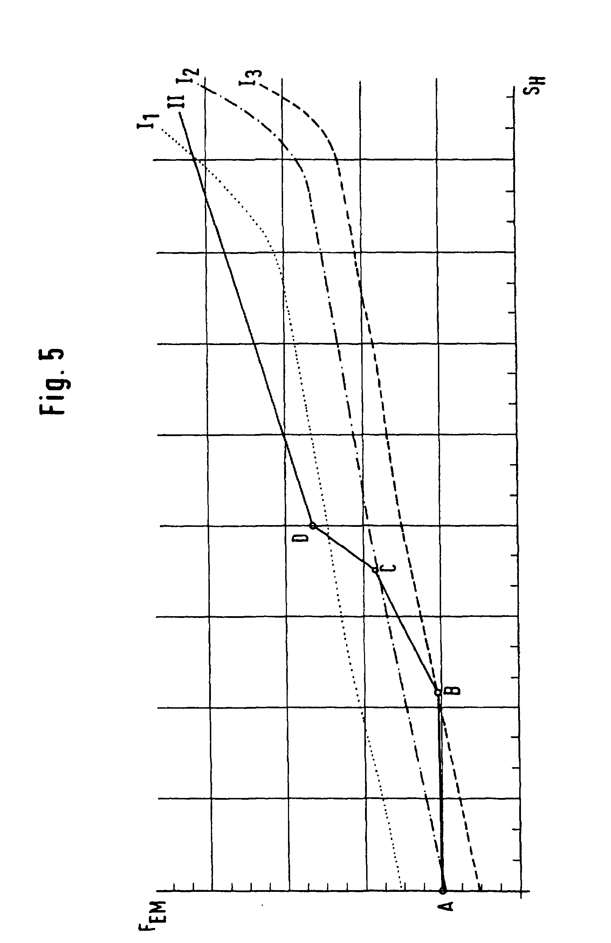

Die Funktion des hier beschriebenen bzw. dargestellten, fremdbetätigbaren Bremskraftverstärkers geht aus der in Fig. 5 gezeigten diagrammatischen Darstellung der Kraft-Weg-Kennlinien hervor. Wie der Zeichnung zu entnehmen ist, zeigen die mit I₁, I₂ und I₃ gekennzeichneten Verläufe drei verschiedene Kraft-Weg-Kennlinien des Elektromagneten 20 bei dessen Ansteuerung mit einem ersten, zweiten und dritten Stromwert.

Der mit II gekennzeichnete Verlauf stellt das Verhalten des durch den Anker 31 des Elektromagneten 20, die Hülse 32, den Ventilkörper 10 sowie die beschriebenen Federn gebildeten Verbrauchersystems dar. Der erste Abschnitt AB der Kennlinie II zeigt die Wirkung der relativ schwachen Druckfeder 40 zwischen Hülse 32 und Ventilkolben 9, deren Kraft überwunden werden muß, bevor der dritte Dichtsitz 24 an der Dichtfläche 44 des Ventilkörpers 10 zur Anlage kommt. Der zweite Abschnitt BC zeigt einen Anstieg der vom Elektromagneten 20 aufzubringenden Kraft, mit der der Randbereich des Ringes 36 in das Material der Dichtfläche 44 hineingedrückt wird, bis im Schnittpunkt C der Kennlinie II mit dem Verlauf I2 eine Berührung zwischen dem dritten Dichtsitz 24 und der Dichtfläche 44 des Ventilkörpers 10 stattfindet. Im dritten Abschnitt CD werden sowohl der Randbereich des Ringes 36 als auch der dritte Dichtsitz 24 in die Dichtfläche 44 unter gleichzeitigem Verschieben des Ventilkörpers 10 gegen die Kraft der Ventilfeder 22 hineingedrückt, bis im Punkt D ein Öffnen des zweiten Dichtsitzes 16 und somit ein Druckaufbau beginnt. Bei einem weiteren Verschieben der Hülse 32 wird ein definierter Spalt zwischen dem zweiten Dichtsitz 16 und der Dichtfläche 44 des Ventilkörpers 10 und somit ein definierter Gradient des in der Arbeitskammer 3 herrschenden pneumatischen Druckes eingestellt. Beim Erreichen eines gewünschten Druckwertes wird der dem Elektromagneten 20 zugeführte Strom gesenkt, so daß die Hülse 32 sich zurückbewegt. Im Abschnitt DC, in dem der dem Elektromagneten 20 zugeführte Strom z. B. auf den Wert I₁ gesenkt wird und sowohl der zweite (16) als auch der dritte Dichtsitz 24 geschlossen sind, erfolgt die in Fig. 2c dargestellte pneumatische Druckhaltephase. Durch eine weitere Senkung des Stromes auf den Wert I₂ bewegen sich die Hülse 32 mit dem Ring 36 weiter zurück, bis im Punkt C eine Druckabbauphase (Fig. 2d) eingeleitet wird. Bei einer weiteren Senkung des Stromes, z. B. auf den Wert I₃, im Abschnitt CB wird der Abstand zwischen dem dritten Dichtsitz 24 und der Dichtfläche 44 größer, wobei der Randbereich des Ringes 36 unter der Wirkung des elastischen Elementes 37 an der Dichtfläche 44 anliegt. Der Abschnitt CB entspricht einem Bereich, in dem das Verbrauchersystem durch Änderungen der dem Elektromagneten 20 zuzuführenden Stromwerte zwischen I₂ und I₃ stabil einstellbar ist, d.h., in dem ein definierter Spalt zwischen dem dritten Dichtsitz 24 und der Dichtfläche 44 des Ventilkörpers 10 unter Zwischenschaltung des Randbereiches des Ringes 36 und somit ein definierter Gradient des in der Arbeitskammer 3 herrschenden pneumatischen Druckes eingestellt werden kann. Die Verbraucher-Kennlinie II weist in diesem Abschnitt eine größere Steigung als die Kraft-Weg-Kennlinien des Elektromagneten 20 zwischen den Stromwerten I₂ und I₃ auf. Der Berührungspunkt B der Kraft-Weg-Kennlinie I₃ mit der Verbraucherkennnlinie II, in dem der Randbereich des Ringes 36 von der Dichtfläche 44 des Ventilkörpers 10 abhebt, stellt gleichzeitig den Übergang zwischen dem stabilen Bereich und einem instabilen Bereich BA dar.

### Bezugszeichenliste

- 1: Verstärkergehäuse
- 2: bewegliche Wand
- 3: Arbeitskammer
- 4: Unterdruckkammer
- 5: Steuergehäuse
- 6: Reaktionsscheibe
- 7: Betätigungsstange
- 8: Membranteller
- 9: Ventilkolben
- 10: Ventilkörper
- 11: Querglied
- 12: Steuerventil
- 13: Dichtlippe
- 14: Druckstange
- 15: Dichtsitz
- 16: Dichtsitz
- 17: Raum
- 18: Rollmembran
- 19: Durchlaß
- 20: Elektromagnet
- 21: Führungsteil
- 22: Ventilfeder
- 23: Kopfflansch
- 24: Dichtsitz
- 25: Gehäuse
- 26: Rückstellfeder
- 27: Kolbenstangenrückholfeder
- 28: Kanal
- 29: Kanal
- 30: Verschlußteil
- 31: Anker
- 32: Hülse
- 33: Übersetzungsscheibe
- 34: Tellerfeder
- 35: Anlagefläche
- 36: Ring
- 37: Element
- 38: Anschlag
- 39: Durchbruch
- 40: Feder
- 41: Dichtlippe
- 42: Vorderteil
- 43: Ringraum
- 44: Dichtfläche
- 45: Versteifungsscheibe
- 46: Spule
- 47: Mikroschalter
- 48: Betätigungselement
- 49: Anschlag
- 50: Feder
- 51: Anschlag
- 52: Ringfläche
- 53: Öffnung

## Patentansprüche

1. Bremskraftverstärker für Kraftfahrzeuge mit einem Verstärkergehäuse (1), dessen Innenraum durch eine bewegliche Wand (2) in eine Unterdruckkammer (4) und eine Arbeitskammer (3) unterteilt ist, sowie mit einem die bewegliche Wand (2) tragenden Steuergehäuse (5), in dem ein Steuerventil (12) angeordnet ist, das eine auf die bewegliche Wand (2) einwirkende pneumatische Druckdifferenz steuert und sowohl durch eine Betätigungsstange (7) mittels eines Ventilkolbens (9) als auch unabhängig von der Betätigungsstange (7) durch einen mit dem Ventilkolben (9) fest verbundenen Elektromagneten (20) betätigbar ist und aus drei konzentrisch zueinander angeordneten Dichtsitzen (15, 16, 24) sowie einem mit den Dichtsitzen (15, 16, 24) zusammenwirkenden Ventilkörper (10) besteht, wobei der erste Dichtsitz (15) im Steuergehäuse (5) und der zweite Dichtsitz (16) am Ventilkolben (9) ausgebildet sind, während der dritte Dichtsitz (24) an einer mit dem Elektromagneten (20) zusammenwirkenden Hülse (32) ausgebildet ist, **dadurch gekennzeichnet, daß** Mittel (36,37,39) vorgesehen sind, die in der Druckabbauphase während der Rücklaufbewegung des dritten Dichtsitzes (24) vom Ventilkörper (10) einen gesteuerten pneumatischen Druckausgleich zwischen Arbeits- (3) und Unterdruckkammer (4) ermöglichen.

2. Bremskraftverstärker nach Anspruch 1, **dadurch gekennzeichnet, daß** ein gegenüber dem dritten Dichtsitz (24) verschiebbar angeordneter Ring (36) vorgesehen ist, der unter Zwischenschaltung eines elastischen bzw. zusammendrückbaren Elementes (37) an der Hülse (32) abgestützt ist und dessen dem Ventilkörper (10) zugewandter Randbereich radiale Durchbrüche (39) aufweist und in der Lösestellung gegenüber dem dritten Dichtsitz (24) zum Ventilkörper (10) hin axial versetzt angeordnet ist.

3. Bremskraftverstärker nach Anspruch 2, **dadurch gekennzeichnet, daß** der Ring (36) den dritten Dichtsitz (24) radial umgreift.

4. Bremskraftverstärker nach Anspruch 2 oder 3 **dadurch gekennzeichnet, daß** der Ring (36) in der Ruhestellung an einem an der Hülse (32) ausgebildeten Anschlag (51) anliegt.

5. Bremskraftverstärker nach Anspruch 2 oder 3 **dadurch gekennzeichnet, daß** das elastische Element (37) sowohl an der Hülse (32) als auch am Ring (36) anvulkanisiert ist.

6. Bremskraftverstärker nach Anspruch 1 **dadurch gekennzeichnet, daß** der Ventilkörper (10) im Anlagebereich des dritten Dichtsitzes (24) mit einer zusäztlichen Ringfläche (52) versehen ist, die radiale Öffnungen (53) aufweist.

7. Bremskraftverstärker nach Anspruch 1 **dadurch gekennzeichnet, daß** der dritte Dichsitz mit axialen Ausnehmungen versehen ist.

8. Bremskraftverstärker nach Anspruch 7 **dadurch gekennzeichnet, daß** der dritte Dichsitz eine wellige Dichkante aufweist.

## Claims

1. Brake force booster for motor vehicles with a booster housing (1), the interior of which is divided into a vacuum chamber (4) and an operating chamber (3) by means of a movable wall (2), and with a control housing (5) that carries the movable wall (2) and accommodates a control valve (12) that controls a pneumatic differential pressure acting on the movable wall (2), wherein the control valve can be actuated by an actuating rod (7) by way of a valve piston (9) and independently of the actuating rod (7) by an electromagnet (20) that is rigidly connected to the valve piston (9), the said control valve consisting of three sealing seats (15,16,24) that are arranged mutually concentrically as well as a valve body (10) that cooperates with the sealing seats (15,16,24), wherein the first sealing seat (15) is arranged in the control housing (5), the second sealing seat (16) is arranged on the valve piston (9), and the third sealing seat (24) is arranged on a sleeve (32) that cooperates with the electromagnet (20), **characterized in that** means (36, 37, 39) are provided which allow a controlled pneumatic pressure compensation between the operating chamber (3) and the vacuum chamber (4) during the pressure reduction phase, i.e., during the return movement of the third sealing seat (24) from the valve body (10).

2. Brake force booster as claimed in claim 1, **characterized in that** a ring (36) that can be displaced relative to the third sealing seat (24) is provided, the said ring being supported on the sleeve (32) by the intermediary of an elastic or compressible element (37), and wherein the edge region of said ring which faces the valve body (10) includes radial openings (39) and is arranged axially offset relative to the third sealing seat (24), i.e., toward the valve body (10), in the release position.

3. Brake force booster as claimed in claim 2, **characterized in that** the ring (36) radially encompasses the third sealing seat (24).

4. Brake force booster as claimed in claim 2 or 3, **characterized in that** the ring (36) abuts on a limit stop (51) arranged on the sleeve (32) in the rest position.

5. Brake force booster as claimed in claim 2 or 3, **characterized in that** the elastic element (37) is vulcanized onto the sleeve (32) as well as onto the ring (36).

6. Brake force booster as claimed in claim 1, **characterized in that** in the area in which it contacts the third sealing seat (24), the valve body (10) includes an additional annular surface (52) that contains radial openings (53).

7. Brake force booster as claimed in claim 1, **characterized in that** the third sealing seat includes axial recesses.

8. Brake force booster as claimed in claim 7, **characterized in that** the third sealing seat contains an undulating sealing edge.

## Revendications

1. Servofrein pour véhicule automobile comportant un boîtier (1) du servofrein dont le volume intérieur est divisé par une paroi mobile (2) en une chambre sous dépression (4) et une chambre de travail (3), ainsi qu'un boîtier de commande (5) qui porte la paroi mobile (2) et dans lequel est disposée une soupape de commande (12) laquelle commande une différence de pression pneumatique agissant sur la paroi mobile (2) et peut être actionnée aussi bien par une tige d'actionnement (7) au moyen d'un piston de soupape (9) que, indépendamment de la tige d'actionnement (7), par un électro-aimant (20) solidaire du piston de soupape (9) et qui est constituée de trois sièges d'étanchéité (15, 16, 24) disposés concentriquement ainsi que d'un corps de soupape (10) qui coopère avec les sièges d'étanchéité (15, 16, 24), le premier siège d'étanchéité (15) étant réalisé dans le boîtier de commande (5) et le deuxième siège d'étanchéité (16) sur le piston de soupape (9), tandis que le troisième siège d'étanchéité (24) est réalisé sur une douille (32) qui coopère avec l'électro-aimant (20), **caractérisé en ce que** sont prévus des moyens (36, 37, 39) qui permettent, au cours de la phase de réduction de pression, pendant le mouvement de retour du troisième siège d'étanchéité (24) du corps de soupape (10), un équilibrage commandé de la pression pneumatique entre la chambre de travail (3) et la chambre sous dépression (4).

2. Servofrein selon la revendication 1, **caractérisé en ce qu'**il est prévu une bague (36) qui est disposée de manière à pouvoir coulisser par rapport au troisième siège d'étanchéité (24) et qui est soutenue contre la douille (32), par interposition d'un élément (37) élastique ou pouvant être comprimé, et dont la zone de bordure, tournée vers le corps de soupape (10), présente des ajours radiaux (39), et qui, dans la position desserrée, est disposée décalée axialement par rapport au troisième siège d'étanchéité (24), vers le corps de soupape (10).

3. Servofrein selon la revendication 2, **caractérisé en ce que** la bague (36) entoure radialement le troisième siège d'étanchéité (24).

4. Servofrein selon la revendication 2 ou 3, **caractérisé en ce que** la bague (36) s'applique, en position de repos, contre une butée (51) formée sur la douille (32).

5. Servofrein selon la revendication 2 ou 3, **caractérisé en ce que** l'élément élastique (37) est vulcanisé sur la douille (32) comme sur la bague (36).

6. Servofrein selon la revendication 1, **caractérisé en ce que** le corps de soupape (10) est pourvu, dans la zone de contact du troisième siège d'étanchéité (24), d'une surface annulaire (52) supplémentaire qui présente des ouvertures radiales (53).

7. Servofrein selon la revendication 1, **caractérisé en ce que** le troisième siège d'étanchéité est pourvu d'évidements axiaux.

8. Servofrein selon la revendication 7, **caractérisé en ce que** le troisième siège d'étanchéité présente un bord d'étanchéité ondulé.
